# EUROPEAN PATENT APPLICATION

(11) **EP 2 684 467 A1**
(43) Date of publication of application: **15.01.2014**
(21) Application number: 12755158.8
(22) Date of filing: 09.03.2012
(51) Int. Cl.: A23L 1/221, A23D 9/007, A23L 1/22, A21D 13/08, A23G 9/32, A23G 9/44, A23G 9/52, A23L 1/39

(54) **TASTE IMPROVEMENT AGENT**

(30) Priority: 10.03.2011 JP 2011053430
(71) Applicant: Takasago International Corporation, Tokyo-to 144-8721 (JP)
(72) Inventor: OHMIYA Tadamasa, Hiratsuka-shi, Kanagawa 254-0073 (JP); HIRAMOTO Tadahiro, Hiratsuka-shi, Kanagawa 254-0073 (JP)
(74) Representative: Takeuchi, Maya
(86) International application number: PCT/JP2012/056159
(87) International publication number: WO 2012/121381

(57) **Abstract**

The present invention provides a taste improvement agent that can be obtained from extraction residues of coffee by using a simple and easy method and can impart comprehensive taste to a drink or food; a food or drink containing the taste improvement agent; and a method of improving the taste of a food or drink. The present invention relates to a taste improvement agent for a food or drink, which is obtained from an extraction residue of a coffee.

## Description

### Technical Field

The present invention relates to a taste improvement agent for improving the taste of a food or drink; a food or drink, edible oil, flavor, and flavor oil each containing the taste improvement agent; and a method of improving the taste of a food or drink in which the taste improvement agent is added.

### Background Art

With a recent increase in the demand for coffee, the amount of extraction residues remained after coffee is extracted from coffee beans with hot water have been increased. The extraction residues of coffee have been partly utilized as a compost fertilizer or feedstuff, but most of them has been disposed as waste. Coffee processors have various problems such as a tremendous cost necessary for disposing coffee extraction residues as industrial waste and a site that should be secured for disposing them as waste.

There is therefore a recent report on the study on the utilization of coffee extraction residues as a material for shikimic acid, which is an intermediate of a pharmaceutical, while regarding them as a material for useful materials (refer to Patent Document 1).

Extraction residues of coffee contain water-insoluble components such as lipids. With a view to making use of the lipid component, there is a report on a method of extracting an oil or fat from extraction residues of coffee by using supercritical carbon dioxide (refer to Patent Document 2) or a report on a method of recovering an oil content by compressing extraction residues of coffee (refer to Non-patent Document 1).

### Prior Art Documents

### Patent Documents

- Patent Document 1:: JP-A-2007-300809
- Patent Document 2:: JP-A-2-283798

### Non-Patent Document

Non-patent Document 1: Bulletin of Japan Food Industry Association, No. 7, 1983

### Summary of the Invention

### Problems That the Invention Is To Solve

As described above, utilization of extraction residues of coffee has been tried in some methods, but it has many problems to solve, such as necessity of a special apparatus therefor. An object of the present invention is to provide a taste improvement agent that can be obtained from extraction residues of coffee by using a simple and easy method and can impart comprehensive taste to a drink or food; a food or drink containing the taste improvement agent; and a method of improving the taste of a food or drink.

### Means for Solving the Problems

The present inventors have paid attention to extraction residues of coffee, which have so far been disposed as waste, as unused resources, and have carried out an extensive investigation with a view to overcoming the above-mentioned problem. As a result, they have found that an extract from extraction residues of coffee is effective as a novel taste improvement agent and completed the present invention. The present invention provides a taste improvement agent for a food or drink composed of an oil soluble component obtained from extraction residues of coffee. The present invention also provides a food or drink containing the taste improvement agent capable of improving the taste of the food or drink; and a method of improving the taste in which the taste improvement agent capable of improving the taste is added to a food or drink.

The present invention includes the following contents.
[1] A taste improvement agent for a food or drink, which is obtained from an extraction residue of a coffee.
[2] A taste improvement agent for a food or drink, which is obtained by extracting an extraction residue of a coffee with an organic solvent to obtain an extract, and removing the organic solvent from the extract.
[3] A taste improvement agent for a food or drink, which is obtained by extracting an extraction residue of a coffee with an organic solvent to obtain an extract, removing the organic solvent from the extract, and then, subjecting to an oxidation treatment.
[4] The taste improvement agent according to [2] or [3], wherein the organic solvent is at least one selected from the group consisting of an alcohol compound having from 1 to 4 carbon atoms, a fatty acid alkyl ester compound having from 3 to 8 carbon atoms, an ether compound having from 4 to 6 carbon atoms, an aliphatic hydrocarbon having from 3 to 8 carbon atoms, and an aliphatic ketone having from 3 to 6 carbon atoms.
[5] The taste improvement agent according to any one of [2] to [4], wherein the organic solvent is at least one selected from the group consisting of an alcohol compound having from 1 to 4 carbon atoms, a fatty acid alkyl ester compound having from 3 to 8 carbon atoms, an ether compound having from 4 to 6 carbon atoms, and an aliphatic hydrocarbon having from 3 to 8 carbon atoms.
[6] A food or drink, comprising the taste improvement agent according to any one of [1] to [5].
[7] An edible oil, comprising the taste improvement agent according to any one of [1] to [5].
[8] A flavor, comprising the taste improvement agent according to any one of [1] to [5].
[9] A flavor oil, which is obtained by thermal extraction from a mixture of the taste improvement agent according to any one of [1] to [5] and a flavoring material.
[10] A method of improving taste of a food or drink, comprising adding the taste improvement agent according to any one of [1] to [5] to a food or drink.

### Advantage of the Invention

The taste improvement agent of the present invention makes it possible to enhance the taste of a food or drink that can be taken orally, particularly, the taste of a food or drink that goes well with oils or fats, or to mask an unpleasant taste or odor peculiar to a food or drink.

### Mode for Carrying Out the Invention

The present invention will hereinafter be described specifically. It is to be noted that, in the present invention, "wt%", "wt ppm", and "part (parts) by weight" have the same meanings as "mass%", "mass ppm", and "part (parts) by mass", respectively.

The term "taste" in "improvement of taste" or "taste improvement" embraces all of the senses of feeling when a taste and a smell are present separately and when a taste and a smell are present in a mixed state and the senses of feeling when a taste and stimulation to the throat are present in a mixed state.

The term "improvement of taste" or "taste improvement" means improvement of a complex taste of a food or drink, including a taste such as bitterness, astringency, sourness, harsh taste, scratchy taste, and other special tastes (grassy taste of vegetables, raw fishy taste, and the like), smells such as acid smell, raw smell, and other special smells (raw smell of fishes, fishy smell, meat smell, smell of vegetables with strong smell such as chive and garlic, and the like), and flavors.

### (a) Taste improvement agent obtained from extraction residues of coffee

### (1) Extraction residues of coffee as a material

As coffee beans for the extraction residues of coffee to be used in the present invention, any beans can be used irrespective of their kind or production area. From the standpoint of easy availability, Arabica from Brazil, Columbia or the like and Robusta from Vietnam, Indonesia or the like are selected as the coffee beans.

The extraction residues of coffee to be used in the present invention can be used either singly or in combination of two or more thereof.

### (2) Method of producing a taste improvement agent from extraction residues of coffee

A method of preparing the taste improvement agent of the present invention from extraction residues of coffee is not particularly limited insofar as it can separate an oil soluble component contained in the extraction residues of coffee. Specific examples of the method include a solvent extraction method using an organic solvent or the like, a supercritical method using supercritical carbon dioxide, and a compression method. Of these methods, the extraction method using an organic solvent is preferred because it is simple, easy and inexpensive.

The method of preparing the taste improvement agent of the present invention will next be described by using a solvent extraction method as an example, but the present invention is not limited thereto.

### (i) Extraction with an organic solvent

First, extraction residues of coffee are extracted with an organic solvent to obtain an organic solvent extract of a taste improvement agent.

As the organic solvent to be used for extraction, at least one organic solvent selected from the group consisting of an alcohol compound having from 1 to 4 carbon atoms, a fatty acid alkyl ester compound having from 3 to 8 carbon atoms, an ether compound having from 4 to 6 carbon atoms, an aliphatic hydrocarbon having from 3 to 8 carbon atoms, and an aliphatic ketone having from 3 to 6 carbon atoms. Of these, an aliphatic hydrocarbon having from 3 to 8 carbon atoms, an alcohol compound having from 1 to 4 carbon atoms, a fatty acid alkyl ester compound having from 3 to 8 carbon atoms, and an ether compound having from 4 to 6 carbon atoms are preferred from the standpoint of safety to human bodies and handleability. Specific examples of the organic solvent include butane, propane, methanol, ethanol, 1-propanol, 2-propanol, 1-butanol, 2-butanol, propylene glycol, methyl acetate, ethyl acetate, hexane, heptane, acetone, diethyl ether, and acetone.

Although the amount of the organic solvent to be used for extraction can be selected freely, it is usually from 1 to 100 times, more preferably from 2 to 10 times the amount of dried extraction residues of coffee, based on a weight standard. Extraction temperature and time can be determined freely and are not particularly limited. Extraction temperature is preferably from 0°C to 100°C, more preferably from 10°C to 80°C and extraction time is preferably from 1 to 72 hours, more preferably from about 2 to 7 hours.

As the extraction method, there are a batch system extraction, a semi-batch system extraction, and a continuous system extraction and any of these methods can be used. As a method of bringing the solvent into contact with the material, there are a transflux system and an immersion system, and either one can be employed.

The extraction residues of coffee may contain water, but in order to enhance the effect such as extraction efficiency, it is preferred to reduce the water content as much as possible prior to mixing with the organic solvent. It is preferred to reduce the water content to 3 wt% or less, more preferably to grind the residues.

### (ii) Removal of organic solvent from organic solvent extract

In order to obtain the taste improvement agent of the present invention from the organic solvent extract obtained in the method (i), the organic solvent must be removed. As a removal method, distillation under normal pressure or reduced pressure is preferred. Distillation conditions can be selected, depending on the boiling point of the organic solvent under normal pressure and are not particularly limited. Distillation temperature is preferably from 0°C to 200°C, more preferably from 10°C to 100°C and distillation pressure is preferably from 1.0 Pa to 0.1 MPa.

### (3) Taste improvement agent

The oily product obtained by the above-mentioned operation may be used directly as the taste improvement agent of the present invention. Alternatively, it may be diluted appropriately. For example, it can be used after diluted from 1.5 to 10¹⁰ fold with an edible oil or fat. It may also be used after mixed with various food materials or food additives at an arbitrary ratio. The taste improvement agent of the present invention can be added to any food or drink by preparing it in various forms. For example, the taste improvement agent which has been emulsified or solubilized can be added to a water-soluble food or drink to thereby improve the taste thereof.

A method of emulsification is not particularly limited. There are many kinds of emulsifiers usable therefor. Generally, surfactants such as ionic surfactants and nonionic surfactants and protective colloid substances such as natural gums can be used as an emulsifier or emulsion stabilizer.

Examples of the surfactants include, but not particularly limited to, propylene glycol fatty acid esters, glycerin fatty acid esters, sorbitan fatty acid esters, potassium stearoyl lactylate, sucrose fatty acid esters, enju saponin, barley husk extract, quillaja extract, enzyme-treated soybean saponin, enzyme-treated lecithin, enzyme-decomposed lecithin, plant sterol, plant lecithin, sphingolipid, soybean saponin, bile powder, tea seed saponin, animal sterol, tomato glucolipids, beet saponin, fractionated lecithin, yucca foam extract, and yolk lecithin.

Examples of the natural gums include, but not particularly limited to, linseed gum, gum arabic, arabinogalactan, alginic acid, Aloe vera extract, welan gum, elemi resin, oligoglucosamine, cassia gum, gum ghatti, carrageenan, karaya gum, carob bean gum, xanthan gum, Aloe arborescens extract, chitin, chitosan, guar gum, enzyme-decomposed guar gum, glucosamine, psyllium seed gum, desert wormwood seed gum, gellan gum, sclero gum, sesbania gum, tamarind seed gum, tara gum, dammar resin, dextran, tragacanth gum, tororoaoi, bacillus natto gum, paffia extract, microfibrillated cellulose, furcelleran, fukuronori extract, pullulan, pectin, macrophomopsis gum, peach resin, rhamsan gum, and levan.

Examples of a method of solubilization include, but not particularly limited thereto, an essence method in which it is dissolved in a water soluble solvent such as hydrous alcohol or propylene glycol.

The taste improvement agent of the present invention may be subjected to purification treatment as needed. For purification, known crude oil refining methods can be used. For example, that described in The Handbook of Oil Chemistry, 4th ed. - Lipids and Surfactants - p. 605 (Japan Oil Chemists' Society) can be exemplified.

The taste improvement agent of the present invention may also be used after treated with various coating material to be in powder form or granule form. The taste improvement agent in powder form or granule form can be obtained by mixing with an ordinarily employed coating material, followed by, for example, spray drying or freeze drying. Examples of the coating material include, but not particularly limited thereto, gum arabic, cyclodextrin, dextrin, gelatin, and processed starch.

### (4) Oxidation treatment of taste improvement agent

In the present invention, the taste improvement agent obtained by using the above-mentioned method (a) can be subjected further to oxidation treatment to thereby obtain an oxidation-treated taste improvement agent. Due to the oxidation treatment, the resulting taste improvement agent has an increased titer and can exhibit its effect even if it is added in a small amount.

The oxidation treatment is not particularly limited and a method known in this technical field may be used. Specific examples of the method include i) a method of diluting the taste improvement agent obtained from extraction residues of coffee with a polar solvent such as water and then stirring the resulting mixture in air, ii) a method of exposing the taste improvement agent to an oxygen gas or air, and iii) a method of adding an enzyme to the taste improvement agent and then mixing them.

The method of exposing the taste improvement agent to an oxygen gas or air is carried out, for example, by passing an oxygen gas or air through 100 g of the taste improvement agent at from 1 to 2000 ml/min, more preferably from 5 to 1000 ml/min while stirring.

As the above-mentioned enzyme, lipase, lipoxygenase, and the like can be used. Enzyme mixtures such as soybean crude enzyme and enzyme-containing extracts derived from animal or plant sources can also be used.

In the oxidation treatment, it is preferred to conduct heating if necessary. Heating can improve a titer or shorten the reaction time. In the method i) or ii) without using an enzyme, oxidation treatment is preferably conducted while heating to from about 80 to 180°C. The oxidation treatment is more preferably conducted while heating to from about 80 to 150°C, and the oxidation treatment is further preferably conducted while heating to from about 80 to 120°C being still more preferred. In the method iii) using an enzyme, it is desired to heat under temperature conditions most suited for the enzyme.

The time of oxidation treatment differs, depending on the heating temperature, production scale or the like, and it is usually from about 1 to 48 hours. The treatment is conducted so as to adjust the peroxide number of the resulting oxidation-treated taste improvement agent to preferably from 10.0 to 120 meq/kg, more preferably from 10 to 40 mg/kq. For the measurement of this peroxide number, a known method can be used. Examples thereof include The JOCS Standard Methods for the Analysis of Fats, Oils and Related Materials (ed. by Japan Oil Chemists' Society).

From the oxidation-treated product, a low-boiling-point component is removed to prepare a high-boiling-point component mixture, which may be used as the taste improvement agent of the present invention. Removal of a low-boiling-point component leads to removal of an oxidation decomposition product poor in flavor or an oxidation decomposition product deteriorating the preference.

Examples of a method of removing a low-boiling-point component from the oxidation treated product include vacuum distillation, steam distillation, and vacuum steam distillation. The term "low boiling point component" means a component recovered by vacuum distillation or vacuum steam distillation at preferably from 10 to 100 mmHg at a heating temperature set at from 45 to 75°C. It may mean a component recovered by atmospheric steam distillation. As the above-mentioned distillation methods, a method ordinarily employed in this technical field may be used and it is not particularly limited.

The above-mentioned oxidation treated product or a high-boiling-point component mixture obtained by removing a low-boiling-point component from the oxidation treated product may be further purified, and the purified product may be used as the taste improvement agent of the present invention. A distillate residue remained after removal of a low-boiling-point component may contain peroxides as a byproduct upon oxidation treatment so that from the standpoint of storage stability and food safety, the peroxides are preferably removed. Removal of peroxides as much as possible is preferred, but it is possible to obtain an oxidation treated product or high-boiling-point component having a low content of the peroxide can be obtained by purifying the distillate residue remained after removal of a low boiling point component.

The purification treatment is not particularly limited and it may be conducted in a conventional manner. For example, an adsorbent mixing method is preferred.

No particular limitation is imposed on the adsorbent to be used. Preferred examples thereof include silica gel, activated clay, acid clay, magnesium silicate, and activated carbon. They may be used either singly or in combination of two or more thereof. A purified product can be obtained by mixing the adsorbent with the oxidation treated product, the high-boiling-point component mixture, or the distillate residue obtained by removing a low boiling point component from the oxidation treated product; filtering the adsorbent from the mixture immediately after mixing or after passage of a certain time to allow an unnecessary portion to be adsorbed to the adsorbent; and removing the resulting adsorbent.

It is preferred to conduct these treatments particularly so as to give a peroxide number of 5.0 meq/kg or less.

### (b) Food or drink, edible oil, and flavor containing taste improvement agent

### (1) Food or drink containing taste improvement agent

Examples of a food or drink to be improved in taste by the addition of the taste improvement agent of the present invention include, but not limited to, carbonated drinks, fruit drinks, vegetable drinks, beverages for satisfying individual preference, alcoholic drinks, tea drinks, coffee drinks, functional drinks, sugar-free drinks, sports drinks, nutrition and nourishment drinks, dairy products, milk products, lactic acid bacteria beverages, milk beverages, frozen desserts, Japanese sweets, Western confectionery, dessert, ice cream, sherbet, baked confectionery, bakery products, candies, chewing gum, oil or fat products, margarine, coffee whitener, cheese food, dressing, chocolates, seasoning, miso, soy sauce, source, mayonnaise, dressings, processed agricultural products, noodles, plant protein processed products, jam, paste, dessert sauce, pickles, canned agricultural products, fruit juice, pulp processed products, soup powder, retort pouch soup, canned soup, processed livestock products, ham, sausage, hamburger, canned meat, processed seafood products, fish ham, fish sausage, seafood paste products, canned seafood products, frozen food, retort food, instant food, livestock feed, fish feed, and pet feed.

The present invention therefore provides a food or drink containing the taste improvement agent of the present invention.

Of the above-mentioned foods or drinks, more preferred examples thereof include, but not particularly limited to, foods or drinks that go well with an oil or fat, foods or drinks containing milk, and seasonings. Specific examples thereof include an edible oil, curry, stew, harsh beef rice, soups, confectionery, vegetable drinks, coffee drinks, tea drinks, cocoa drinks, cacao drinks, milk products, and processed foods.

A method of adding the taste improvement agent of the present invention is carried out by mixing it with a food or drink that needs taste improvement. For example, it can be added together with other materials in accordance with a conventional adding method during production of the food or drink. In the case of a processed food, direct mixing of it with a material that needs taste improvement is desired, but when they cannot be mixed easily, it is possible to employ a method of spraying a solution of the taste improvement agent to the surface of the material that needs taste improvement or a method of immersing the material in such a solution.

The addition amount of the taste improvement agent of the present invention slightly differs, depending on the kind of the food or drink to be improved in taste. In consideration of the balance between the taste improving effect produced by the taste improvement agent and an influence of the taste of the improvement agent itself on the taste of the food or drink, the addition amount is preferably from 0.1 wt ppm to 10 wt%, particularly preferably from 1 wt ppm to 1 wt%, in the food or drink.

### (2) Edible oil containing taste improvement agent

The taste improvement agent of the present invention can be used, directly or after purification, as an edible oil. Moreover, an edible oil (such an edible oil may hereinafter be called "mixed oil") having a good taste and usable for various applications can be obtained by mixing the taste improvement agent of the present invention with a common edible oil. Purification is conducted in accordance with a known purification method of a crude oil.

The addition amount of the taste improvement agent to the mixed oil of the present invention slightly differs depending on the kind of the oil. From the standpoint of the balance given to the taste, an amount of from 10 wt ppm to 100 wt% in the mixed oil is preferred, and an amount of from 100 wt ppm to 80 wt% in the mixed oil is particularly preferred.

Cooking of ingredients with the edible oil or mixed oil according to the present invention can be expected to be effective for providing a food having a good taste and eating quality or suppressing an unpleasant taste or smell peculiar to the ingredient itself. For example, deep frying, stir-frying, or roasting with the edible oil or mixed oil of the present invention can provide a food having a good taste. Examples of such a food include, but not limited to, broiled meat, saute, croquette, tempura, fried chicken, deep-fried breaded pork, doughnut, deep-fried sweet, fried rice, and octopus dumplings.

For example, seasonings using the edible oil or mixed oil of the present invention as a base oil can have an improved taste and eating quality. Examples of such seasonings include, but not limited thereto, mayonnaise, dressing, sauce, barbeque sauce for meat, barbeque sauce for fish, and marinade liquid.

### (3) Flavor containing taste improvement agent

The taste improvement agent of the present invention can be arbitrarily mixed with a blended flavor, and then, it is used as a flavor. The blended flavor is used for, for example, confectionery, drinks, frozen desserts, desserts, dairy products, fat or oil products, soups, seasonings, processed meat products, processed seafoods products, processed agricultural products, cooked foods, cigarettes, oral care, medical care, feedstuff, or industrial applications, but its application is not limited thereto.

The blended flavor may be arbitrarily mixed with various additives. Examples of the various additives include, but not limited to, sweeteners, coloring agents, preservatives, thickeners, stabilizers, gelling agents, starches, antioxidants, color formers, bleaching agents, antifungal agents, anti-soot agents, acidulants, softening agents, seasonings, coagulants, pH regulators, and swelling agents.

The addition amount of the taste improvement agent in the flavor of the present invention slightly differs, depending on the kind of the flavor. From the standpoint of the balance to be given to the taste, the addition amount is preferably from 1 wt ppm to 80 wt%, particularly preferably from 10 wt ppm to 50 wt%, in the flavor.

### (c) Flavor oil

A flavor oil can be obtained by mixing the taste improvement agent of the present invention with a flavoring material and heating and extracting the mixture in a vessel. The resulting flavor oil provides a flavor having high titer and high preference with top impact.

Although no particular limitation is imposed on a method of extracting a flavor oil, a heating step and solid-liquid separation conducted in a hermetically closed system make it possible to suppress scattering of a flavor component which the flavoring material has and to achieve more faithful reproduction of a flavor and improvement in titer.

The step of mixing the flavoring material and the taste improvement agent can be conducted using various methods, but it is preferred to add the taste improvement agent to the flavoring material and mix them while shredding or grinding the flavoring material in the mixture in order to suppress scattering of the flavor component of the flavoring material. No particular limitation is imposed on the shredding or grinding method and it can be conducted in a known manner using a cutter mixer, food processer, mill, or the like.

An apparatus to be used for extraction is not particularly limited and extraction is conducted preferably in a hermetically closed state. The apparatus having a stirring function is more preferred to improve the extraction efficiency.

The heating and extracting method is not particularly limited and, for example, a known heating method such as heating with steam or heating with electricity can be used. The heating temperature is not particularly limited, but a temperature range from 10 to 250°C is preferred. At a temperature of 250°C or greater, there is a possibility that an unpleasant taste such as burnt taste is generated. Temperatures of 20° or less may cause deterioration in extraction efficiency and titer. Of the above-mentioned temperatures, a temperature range of from 30 to 150°C is preferred from the standpoint of the flavor, titer, and extraction efficiency and a temperature range of from 50 to 120°C is particularly preferred from the standpoint of production efficiency comprehensively judged from the flavor, titer, and extraction efficiency. On the other hand, the extraction time is not particularly limited, but heating time from 1 minute to 200 hours is preferred at the above-mentioned heating temperature.

The flavoring material to be used in the present invention is not particularly limited insofar as it is a food material having a flavor. Examples thereof include spices such as black pepper and ginger and plant flavoring materials such as vegetables such as onion and celery. These may be used either directly or as shredded, paste, dried, or frozen form. Essential oils, extracts, or hydrolysates obtained from them may also be used.

On the other hand, as the flavoring material, animal flavoring materials such as meats, seafoods products, dried seafood, milk/milk products, seaweeds, seasonings, saccharides, and amino acids/nucleic acids, or extracts or hydrolysates thereof may also be used.

If necessary, the above-mentioned flavoring materials may be used either singly or in combination of two or more thereof.

Examples of the spices include hemp seed, asafoetida, ajowan, anise, angelica, fennel, turmeric, shallot, oregano, allspice, orange peel, zedoary, Chinese pepper, cassia, kaffir lime, chamomile, galangal, cardamom, cardamom, curry plant, curry leaves, licorice, catnip, caraway, gardenia, cumin, watercress, cloves, poppy seed, caper, pepper, sesame seed, coriander, saffron, savory, salad burnet, Japanese pepper, perilla, cinnamon, jasmine, juniper berry, ginger, star anise, stevia, spearmint, sage, celery, scented perlargoniums, sorrel, thyme, tade, tamarind, tarragon, dandelion, chives, chervil, dill, red pepper, chameleon plant, nasturtium, nutmeg, wormwood, nigella, Chinese chive, garlic, Hibiscus, basil, parsley, vanilla, mint, paprika, grains of paradise, hyssop, fenugreek, pink pepper, peppermint, bergamot, horseradish, borage, corn salad, mustard, marjoram, Japanese ginger, mace, common yarrow, mugwort, citrus junos, lavender, linden, rocket, rhubarb, lemongrass, lemon balm, lemon scented verbena, lemon peel, rose, rosemary, rose hip, laurel, long pepper, and wasabi.

Examples of the vegetables include pot herbs such as Welsh onion (chives), onion, alpine leek (victory onion), water dropwort, Japanese honeywo, perilla (green perilla, flowers of perilla), Japanese ginger, garlic, watercress, caper, parsley, celery, coriander (coentro, pak chi, yuen sai, rau mùi), basil (basilico), leaves of Japanese pepper, leaves of lemon, flowers (petals) of chrysanthemum, paprika, Chinese chive (leaves, flowers), white radish sprouts, arugula sprouts, soba sprouts, mustard sprouts, broccoli sprouts, pea sprouts (pea), gombo, tade lettuce, garland chrysanthemum, Japanese mustard spinach, water dropwort, and Chinese chive; grain such as rice, wheat, foxtail millet, Japanese barnyard willet, buckwheat, job's tears, and brown rice; teas such as green tea, black tea, and oolong tea; citrus such as Citrus junos, Citrus sphaerocarpa, Citrus sudachi, hirami lemon (Citrus depressa), lemon, lime, and Citrus aurantium; seeds such as sesame, almond nuts, cashew nuts, peanuts, hazelnuts, walnuts (walnut), pecan nuts, chess seeds (chestnuts), macadamia nuts, pistachios, pine nuts, cacao beans, soybeans, red beans, black beans, quail beans, green peas, and coffee beans; and fruits such as apples, cherries, prunes, apricots, bananas, pineapple, grapes, and kiwi. In addition, dried processed products such as pickled plum and dried grapes (raisins) can also be used.

Examples of the meats include beef, pork, chicken, horse meat, and mutton. In these meats, sections such as muscles, internal organs, bones, and extract are usable. As the meats, raw meat, whole state thereof such as meat dried product or frozen product, small pieces obtained by cutting, thin pieces obtained by slicing, crushed meat, or meat paste obtained by grinding may be used. Extracts of meats and various processed products can also be used.

Examples of the seafood products include fish such as tuna, bonito, scad, sardine, saury, conger eel, Pacific ocean perch, conger eel, ayu, angler, eel, tilefish, Japanese needlefish, Spanish mackerel, capelin, sole, Japanese icefish, black sea bream, red sea bream, goby, Sailfin sandfish, Muraenesox cinereus, flounder, flatfish, puffer fish, yellowtail, and pond melt; cephalopods such as squid and octopus; shellfishes such as clams, e.g., short neck clam, hard clam, common fresh water clam, ark shell, green mussel, edible cockle, round clam, surf clam, mussel, pen shell, scallop, and oyster and snails such as turban shell and abalone; crabs such as horsehair crab, snow crab, Hanasaki crab, king crab, and Japanese blue crab; shrimps and crawfish such Pandalus eous, Japanese spiny lobster, prawn, shiba shrimp, sakura shrimp, lobster, and crawfish; and mysids such as Neomysis awatschensis, Anisomysis Hansen, and krill. In the above-mentioned seafoods products, flesh such as fish flesh, internal organs, bones, shells, and extract are usable. They may be any of raw flesh, whole state thereof such as flesh dried product or frozen product, small pieces obtained by cutting, thin pieces obtained by slicing, crushed ones, or paste obtained by grinding. Extracts and various processed products can also be used.

For the above-mentioned dried seafood, processed fishes, particularly processed products of bonito which is a red-fleshed fish, mackerel, sardine, and saury are used. Specific examples thereof include dried bonito, dried ballet mackerel, dried mackerel, dried sardine, dried amberstripe scad, dried saury, boiled and half-dried bonito, dried tuna, dried round herring, and dried small sardine. Dried fishes which are processed seafood are also used as a material to be extracted in the present invention and examples thereof include Japanese flying squid dried in the shade, dried codfish, flying fish, dried adductor, and dried shrimp.

Examples of the milk/milk products include milk, cream, condensed milk, skim milk, a variety of natural cheese, and processed cheese.

Examples of the seaweeds include kelp such as Japanese kelp, Rishiri kelp, and Laminaria longissima, brown seaweed, laver seaweed, Sargassum fusiforme, and processed products of these seaweeds such as dried kelp (kelp for broth) and dried brown seaweed.

Examples of the seasonings include brewed products such as soy sauce, nam pura, a liquid seasoning using fisheries as a main raw material, miso, broad bean chili paste, sweet flour paste, XO sauce, red pepper paste, Doenjang, fermenting mash, sauce, and ketchup; vinegars such as rice vinegar, fruit vinegar, and grain vinegar; alcohol-based seasonings such as sake, sweet cooking rice wine, and wine; and sake lees.

Examples of the above-mentioned saccharides include saccharides such as xylose, ribose, hexose, pentose, glyceraldehyde, dihydroxyacetone, fructose, galactose, sucrose, glucose, maltose, lactose, cellobiose, trehalose, lactitol, and rhamnose, molasses, liquid sugar, honey, and maple sugar. Additional examples thereof include high intensity sweeteners such as glycyrrhizin, dipotassium glycyrrhizinate, thaumatin, monellin, hydrangea extract, licorice extract, Lo Han Guo extract, stevia, aspartame, alitame, sucralose, neohesperidine dihydrochalcones, and saccharin sodium.

Examples of the above-mentioned amino acids/nucleic acids include glycine, alanine, cystine, cysteine, valine, lysine, methionine, isoleucine, leucine, tyrosine, phenylalanine, histidine, threonine, methionine, proline, hydroxyproline, serine, arginine, carnitine, histidine, tryptophan, asparagine, aspartic acid, glutamine, glutamic acid, adenosine, 2-phosphoric acid, adenylic acid, inosinic acid, guanylic acid, uridylic acid, cytidylic acid, inosine, hypoxanthine, plant/animal protein hydrolysates, and yeast extract.

The taste improvement agent of the present invention incorporated in various foods or drinks, used as an edible oil, or used for foods or drinks as a mixture with a flavor is expected to be effective for full body, richness, enhancement, saltiness, and the like; enhancing fattiness, aftertaste, spicyness, and pleasant-smelling; suppressing sourness; or masking an unpleasant smell peculiar to food materials such as agricultural products, meats including livestock meats, and fish flesh. It can therefore provide foods superior in taste.

### Examples

The present invention will hereinafter be described specifically by Examples. However, the present invention is not limited to or by the description in Examples.

### [Example 1] Preparation of taste improvement agent

Extraction residues of coffee (1000 g) were dried under reduced pressure by using an evaporator and 324 g of dried extraction residues of coffee having a water content reduced to 1 wt% or less were obtained. The dried extraction residues of coffee thus obtained were ground with a household mill, followed by mixing with 4.5 times the weight of ethyl acetate. Extraction was conducted while stirring at room temperature for 5 hours. The extract filtered was concentrated under reduced pressure to remove ethyl acetate and 44.5 g of a taste improvement agent was obtained as an oily extract.

### [Example 2] Preparation of taste improvement agent

Extraction residues of coffee (1000 g) were dried under reduced pressure by using an evaporator and 324 g of dried extraction residues of coffee having a water content reduced to 1 wt% or less were obtained. The dried extraction residues of coffee thus obtained were ground with a household mill, followed by mixing with 4.5 times the weight of ethanol. Extraction was conducted while stirring at room temperature for 5 hours. The extract filtered was concentrated under reduced pressure to remove ethanol and 45.4 g of a taste improvement agent was obtained as an oily extract.

### [Example 3] Preparation of taste improvement agent

Extraction residues of coffee (1000 g) were dried under reduced pressure by using an evaporator and 324 g of dried extraction residues of coffee having a water content reduced to 1 wt% or less were obtained. The dried extraction residues of coffee thus obtained were ground with a household mill, followed by mixing with 4.5 times the weight of diethyl ether. Extraction was conducted while stirring at room temperature for 5 hours. The extract filtered was concentrated under reduced pressure to remove diethyl ether and 40.2 g of a taste improvement agent was obtained as an oily extract.

### [Example 4] Preparation of taste improvement agent

Extraction residues of coffee (1000 g) were dried under reduced pressure by using an evaporator and 324 g of dried extraction residues of coffee having a water content reduced to 1 wt% or less were obtained. The dried extraction residues of coffee thus obtained were ground with a household mill, followed by mixing with 4.5 times the weight of 1-propanol. Extraction was conducted while stirring at room temperature for 5 hours. The extract filtered was concentrated under reduced pressure to remove 1-propanol and 51.1 g of a taste improvement agent was obtained as an oily extract.

### [Example 5] Preparation of taste improvement agent

Extraction residues of coffee (1000 g) were dried under reduced pressure by using an evaporator and 324 g of dried extraction residues of coffee having a water content reduced to 1 wt% or less were obtained. The dried extraction residues of coffee thus obtained were ground with a household mill, followed by mixing with 4.5 times the weight of 2-propanol. Extraction was conducted while stirring at room temperature for 5 hours. The extract filtered was concentrated under reduced pressure to remove 2-propanol and 40.1 g of a taste improvement agent was obtained as an oily extract.

### [Example 6] Preparation of taste improvement agent

Extraction residues of coffee (1000 g) were dried under reduced pressure by using an evaporator and 324 g of dried extraction residues of coffee having a water content reduced to 1 wt% or less were obtained. The dried extraction residues of coffee thus obtained were ground with a household mill, followed by mixing with 4.5 times the weight of acetone. Extraction was conducted while stirring at room temperature for 5 hours. The extract filtered was concentrated under reduced pressure to remove acetone and 47.6 g of a taste improvement agent was obtained as an oily extract.

### [Example 7] Preparation of taste improvement agent

Undried extraction residues of coffee (1000 g) and twice the weight of hexane were mixed. The resulting mixture was extracted while stirring at 60°C for 2 hours. The extract filtered was concentrated under reduced pressure to remove hexane and 25.6 g of a taste improvement agent was obtained as an oily extract.

### [Example 8] Purification of taste improvement agent

In a similar manner to that used in Example 1, 1000 g of a taste improvement agent was obtained. With a centrifugal separator, suspending foreign substances were removed to obtain 912 g of a clarified oily substance. Water degumming was conducted by adding 3 wt% of water to the oily substance. After vigorous stirring, the supernatant was recovered using a centrifugal separator to obtain 816 g of an oily substance. Degumming was conducted further by adding 0.5 wt% of phosphoric acid. After vigorous stirring, the supernatant was recovered using a centrifugal separator to obtain 752 g of an oily substance. Deacidification was conducted by adding 70 wt% of a 10% aqueous solution of sodium hydroxide to the resulting oily substance. After vigorous stirring, the supernatant was recovered using a centrifugal separator to obtain 432 g of an oily substance. The resulting oily substance was washed twice with 10 wt% of water. After vigorous stirring, the resulting mixture was separated into two phases by using a centrifugal separator and the supernatant was recovered to obtain 410 g of an oily substance. The resulting oily substance was decolored by adding 5 wt% of activated clay and 1 wt% of activated carbon, followed by stirring at 50° for 30 minutes. Then, 5 wt% of a filter aid was added and filtration was conducted to obtain 350 g of a purified taste improvement agent.

### [Example 9] Oxidation treatment of taste improvement agent

The purified taste improvement agent (100 g) obtained in Example 8 was stirred while aerating it at 120°C for 3 hours and then, heating and aeration were terminated. The oxidation treated product thus obtained had a peroxide number of 19.88 meq/kg. The resulting oxidation treated product was purified by adding 0.2 wt% of activated clay and the resulting mixture was stirred at 60°C for 1 hour. After stirring, the activated clay was filtered off to obtain an oxidation treated taste improvement agent (88.95 g, peroxide number: 2.78 meq/kg).

### [Example 10] Preparation of flavor oil (seasoning oil) by using purified taste improvement agent

After 40 g of cardamom was placed in a table mixer (Labo Milser LM-2) and then 160 g of the purified taste improvement agent obtained in Example 8 was added, shredding and mixing of the resulting mixture were conducted simultaneously. The shredded mixture thus obtained was taken out from the table mixer and extracted by heating under reflux at 100°C for 1 hour while stirring in a 500 ml four-necked flask. After extraction by heating, a solid portion was removed by using a Buchner funnel and filter paper (No. 2, product of Advantech Toyo) to recover 125 g of a liquid phase portion.

### [Examples A1 to A4, Comparative Examples A-1 to A-4] Addition to ramen soup

Miso-taste soup powders (10 g) of a commercially available instant noodles were dissolved in a designated amount (300 g) of hot water and a ramen soup containing 155 mg (addition ratio: 0.05 wt%) of the taste improvement agent obtained in Example 1 was prepared (Example A1). As a comparative example, a ramen soup containing a commercially available canola oil in an amount equal to that of the taste improvement agent was prepared (Comparative Example A1). In a similar manner, soy sauce taste, salt taste and pork bone taste soups were prepared (soy sauce taste: Example A2, Comparative Example A2, salt taste: Example A3, Comparative Example A3, pork bone taste: Example A4, Comparative Example A4).

Organoleptic evaluation of each of the ramen soups thus prepared was conducted by a panel of seven experts. The results are shown in Table 1. As a result, with regard to the miso taste soups, the soup of Example A1 containing the taste improvement agent of the present invention showed obviously taste enhanced results, more specifically, an enhanced full body, an enhanced enhancement, enhanced taste thickness, and enhanced spicyness, and was provided with a roast flavor. The soup of Comparative Example A1 containing a canola oil showed no change in taste.

With regard to the soy sauce taste soups, salt taste soups, and pork bone taste soups, the soups containing the taste improvement agent of the present invention (Examples A2 to A4) showed an obviously enhanced taste, more specifically, had an enhanced full body, enhanced taste thickness, and a roast flavor. The soups (Comparative Examples A2 to A4) containing a canola oil showed no change in taste.

**[Table 1]**

| Ramen soup | | Organoleptic evaluation (the number of experts) | | | |
|---|---|---|---|---|---|
| | | Greatly effective | Obviously effective | No effect | Adverse effect |
| Miso taste | Example A1 | 4 | 3 | 0 | 0 |
| | Comp. Ex. A1 | 0 | 0 | 7 | 0 |
| Soy sauce taste | Example A2 | 3 | 4 | 0 | 0 |
| | Comp. Ex. A2 | 0 | 0 | 7 | 0 |
| Salt taste | Example A3 | 4 | 3 | 0 | 0 |
| | Comp. Ex. A3 | 0 | 0 | 7 | 0 |
| Pork bone taste | Example A4 | 3 | 4 | 0 | 0 |
| | Comp. Ex. A4 | 0 | 0 | 7 | 0 |

### [Example B, Comparative Examples B1 and B2] Addition to curry roux

Commercially available curry roux (220 g) was dissolved in a designated amount (1400 g) of hot water and curry roux containing 810 mg (addition ratio: 0.05 wt%) of the taste improvement agent obtained in Example 1 was prepared (Example B). As Comparative Examples, curry roux containing a commercially available cotton seed oil (Comparative Example B1) and curry roux containing a palm oil (Comparative Example B2), each containing the oil in an amount equal to that of the taste improvement agent, were prepared.

Organoleptic evaluation of the curry roux thus obtained was conducted by a panel of seven experts. The results are shown in Table 2. As a result, the curry roux containing the taste improvement agent of the present invention showed an obviously enhanced taste, more specifically, enhanced full body and spicyness, enhanced saltiness, and a more concentrated taste. On the other hand, the curry roux containing a cotton seed oil provided a sticky afterfeel and oily smell, while that containing a palm oil showed no change in taste.

**[Table 2]**

| Curry roux | Organoleptic evaluation (the number of experts) | | | |
|---|---|---|---|---|
| | Greatly effective | Obviously effective | No effect | Adverse effect |
| Example B | 6 | 1 | 0 | 0 |
| Comparative Example B1 | 0 | 0 | 1 | 6 |
| Comparative Example B2 | 0 | 0 | 7 | 0 |

### [Example C, Comparative Example C] Addition to coffee drink

In order to add to a water soluble food or drink, according to a formulation containing 10 wt% of the taste improvement agent of the present invention obtained in Example 1, an emulsion (ion exchanged water: 25 wt%, polyglyceryl monostearate: 5 wt%, purified glycerin: 60 wt%, the taste improvement agent of the present invention: 10 wt%) was prepared (Example C). The resulting emulsion was added to a commercially available canned coffee drink at an addition ratio of 0.02 wt% and organoleptic evaluation was conducted by a panel of seven experts. The results are shown in Table 3. It had improved richness, palatability, fattiness, and preference and particularly, it showed marked taste improvement in aftertaste, compared with the case where the taste improvement agent had not been added, meaning that an emulsion prepared according to a formulation containing 10 wt% of a medium-chain fatty acid triglyceride (ion exchanged water: 25 wt%, polyglyceryl monostearate: 5 wt%, purified glycerin: 60 wt%, medium-chain fatty acid triglyceride: 10 wt%) had been added (Comparative Example C).

**[Table 3]**

| Coffee drink | Organoleptic evaluation (the number of experts) | | | |
|---|---|---|---|---|
| | Greatly effective | Obviously effective | No effect | Adverse effect |
| Example C | 5 | 2 | 0 | 0 |
| Comparative Example C | 0 | 0 | 7 | 0 |

### [Example D, Comparative Example D] Addition to instant coffee

Commercially available instant coffee (2 g) was dissolved in a designated amount (138 g) of hot water. To the resulting solution was added 28 mg (addition ratio: 0.02 wt%) of each of the emulsions prepared in Example C and Comparative Example C. Organoleptic evaluation was conducted on the resulting mixtures by a panel of seven experts. The results are shown in Table 4. Compared with the mixture of Comparative Example D without containing the taste improvement agent of the present invention, the mixture of Example D containing the taste improvement agent had improved richness and preference and it showed marked taste improvement particularly in aftertaste.

**[Table 4]**

| Instant coffee | Organoleotic evaluation (the number of experts) | | | |
|---|---|---|---|---|
| | Greatly effective | Obviously effective | No effect | Adverse effect |
| Example D | 6 | 1 | 0 | 0 |
| Comparative Example D | 0 | 0 | 7 | 0 |

### [Example E, Comparative Example E] Addition to consomme soup

The taste improvement agent (20 mg) obtained in Example 1 was added to 40 g (addition ratio: 0.05 wt%) of a commercially available consomme soup to obtain a taste-improved consomme soup (Example E). A consomme soup of Comparative example was prepared by adding a canola oil in an amount equal to that of the taste improvement agent (Comparative Example E).

Organoleptic evaluation on the consomme soup thus prepared was conducted by a panel of seven experts. The results are shown in Table 5. As a result, the consomme soup of Example E containing the taste improvement agent of the present invention showed obvious taste improvement such as enhanced body, improved saltiness, and more concentrated taste. The consomme soup of Comparative Example E containing a canola oil, on the other hand, showed no change in taste.

**[Table 5]**

| Consomme soup | Organoleptic evaluation (the number of experts) | | | |
|---|---|---|---|---|
| | Greatly effective | Obviously effective | No effect | Adverse effect |
| Example E | 5 | 2 | 0 | 0 |
| Comparative Example E | 0 | 0 | 7 | 0 |

### [Example F, Comparative Example F] Addition to cookie

The taste improvement agent (177 mg) obtained in Example 1 was added to 177.52 g (addition ratio: 0.1 wt%) of cookie dough to obtain a taste-improved cookie (Example F). As a comparative example, a cookie containing a canola oil in an amount equal to that of the taste improvement agent was prepared (Comparative Example F).

The cookie dough was prepared in the following manner. First, 36.00 g of an oil or fat was mixed lightly with 5.00 g of skimmed milk, 28.00 g of superfine sugar, and 0.02 g of salt. To the resulting mixture were added 8.00 g of whole egg stirred, 0.25 g of sodium bicarbonate, and 0.25 g of ammonium hydrogen carbonate in several batches. The resulting mixture was mixed without causing separation. To the resulting mixture was added 100.00 g of sifted cake flour, followed by mixing to prepare dough. The taste improvement agent or a canola oil was added to the resulting dough and the mixture was shaped. Then, a cookie was baked in an oven while adjusting the upper heat to 180°C and the lower heat to 160°C.

Organoleptic evaluation on the cookie thus baked was conducted by a panel of seven experts. The results are shown in Table 6. As a result, the cookie containing the taste improvement agent of the present invention had increased richness and provided aftertaste. Thus, the taste improvement agent of the present invention obviously enhanced the taste. The cookie containing a canola oil showed no change in taste.

**[Table 6]**

| Cookie | Organoleptic evaluation (the number of experts) | | | |
|---|---|---|---|---|
| | Greatly effective | Obviously effective | No effect | Adverse effect |
| Example F | 6 | 1 | 0 | 0 |
| Comparative Example F | 0 | 0 | 7 | 0 |

### [Example G, Comparative Example G] Addition to ice cream

The taste improvement agent (100 mg) obtained in Example 1 was added to 100 g of commercially available ice cream (addition ratio: 0.1 weight%) to obtain taste-improved ice cream (Example G). As a comparative example, ice cream containing a palm oil in an amount equal to that of the taste improvement agent was prepared (Comparative Example G).

Organoleptic evaluation on the ice cream thus prepared was conducted by a panel of seven experts. The results are shown in Table 7. As a result, the ice cream of Example G containing the taste improvement agent of the present invention had increased richness and sweetness and provided aftertaste. Thus, it had an obviously enhanced taste. The ice cream of Comparative Example G containing a palm oil showed no change in taste.

**[Table 7]**

| Ice cream | Organoleptic evaluation (the number of experts) | | | |
|---|---|---|---|---|
| | Greatly effective | Obviously effective | No effect | Adverse effect |
| Example G | 6 | 1 | 0 | 0 |
| Comparative Example G | 0 | 0 | 7 | 0 |

### [Examples H1 to H4, Comparative Examples H1 to H4] Addition to edible oil (cooking of meats)

An oil for stir frying (10 g) was prepared by mixing 1 g of the taste improvement agent of the present invention obtained in Example 1 and 9 g of a canola oil and a comparison test was conducted using 10 g of a canola oil (taste improvement agent-free product) as a comparative example.

A frying pan was heated sufficiently on a household cooking stove. After 10 g of the stir-frying oil or 10 g of a canola oil were applied well to the frying pan, 100 g of a commercially available beef rib for grilling was fried enough on both sides thereof and provided for eating without using any seasoning. Organoleptic evaluation was conducted by a panel of seven experts. As shown in Table 8, compared with the beef rib fried using only a canola oil (Comparative Example H1), the beef rib fried using the oil containing the taste improvement agent of the present invention (Example H1) had an enhanced full body and at the same time, had a reduced animal odor derived from beef tallow. The results show that the beef rib fried using the taste improvement agent-containing oil was less tallowy than that fried using only a canola oil and thus had an obviously improved taste.

Similarly, 100 g of a commercially available pork loin for grilling and 100 g of a commercially available pork belly were fried using a stir frying oil containing the taste improvement agent of the present invention (Example H2 and Example H3). As a result, they had an enhanced full body and had a reduced animal odor peculiar to pork. Compared with the pork fried using only a canola oil (Comparative Example H2 and Comparative Example H3), they were less lardaceous and thus had an obviously improved taste.

Further, 20 g of a chicken thigh commercially available for heat cooking was cut into pieces of a proper size and cooked similarly. An organoleptic evaluation was conducted on them. As a result, the chicken thigh fried using the stir frying oil containing the taste improvement agent of the present invention (Example H4) provided an enhanced full body, had neither a smell peculiar to chicken nor an oily smell, provided a roast flavor, had the flavor of a grilled chicken, and the like.

When a section of meat rich in fat was cooked with the taste improvement agent of the present invention, the resulting meat provided less lardaceous taste while suppressing an oily smell derived from the material. Thus, the results showed cooking with the taste improvement agent of the present invention provided a more marked taste improving effect.

**[Table 8]**

| Edible oil | | Organoleptic evaluation (the number of experts) | | | |
|---|---|---|---|---|---|
| | | Greatly effective | Obviously effective | No effect | Adverse effect |
| Beef(beef rib) | Example H1 | 4 | 3 | 0 | 0 |
| | Comp. Ex. H1 | 0 | 0 | 7 | 0 |
| Pork (loin) | Example H2 | 3 | 4 | 0 | 0 |
| | Comp. Ex. H2 | 0 | 0 | 7 | 0 |
| Pork (belly) | Example H3 | 6 | 1 | 0 | 0 |
| | Comp. Ex. H3 | 0 | 0 | 7 | 0 |
| Chicken (thigh) | Example H4 | 6 | 1 | 0 | 0 |
| | Comp. Ex. H4 | 0 | 0 | 7 | 0 |

### [Examples 11 to 14, Comparative Examples 11 to 14] Addition to edible oil (cooking of seafood)

The taste improvement agent (5 g) of the present invention obtained in Example 1 and 5 g of a canola oil were mixed to prepare 10 g of a stir-frying oil and a comparison test between the oil and 10 g of a canola oil (taste improvement agent-free product) used as a comparative example was conducted.

A frying pan was heated sufficiently on a household cooking stove. After 10 g of the stir frying oil or 10 g of a canola oil was applied well to the frying pan, 20 g of a commercially available silver salmon piece was grilled on both sides thereof. It was provided for eating without using a seasoning. Organoleptic evaluation on it was conducted by a panel of seven experts. Compared with the salmon piece stir-fried with only a canola oil (Comparative Example 11), the salmon piece stir-fried with the stir-frying oil containing the taste improvement agent of the present invention (Example 11) provided less fish oil odorous and had a reduced fishy smell peculiar to salmon.

As examples of other fishes, billfish, Japanese jack mackerel, and sardine (each, 20 g) were cooked by heating similarly. Compared with the case of stir frying using only a canola oil (Comparative Examples 12 to 14), using the stir frying oil containing the taste improvement agent of the present invention (Examples 12 to 14) suppressed a fishy smell peculiar to each fish and increased a roast flavor.

**[Table 9]**

| Edible oil | | Organoleptic evaluation (the number of experts) | | | |
|---|---|---|---|---|---|
| | | Greatly effective | Obviously effective | No effect | Adverse effect |
| Silver salmon (raw) | Example I1 | 5 | 2 | 0 | 0 |
| | Comp. Ex. I1 | 0 | 0 | 7 | 0 |
| Billfish | Example I2 | 4 | 3 | 0 | 0 |
| | Comp. Ex. I2 | 0 | 0 | 7 | 0 |
| Japanese jack mackerel | Example I3 | 3 | 4 | 0 | 0 |
| | Comp. Ex. I3 | 0 | 0 | 7 | 0 |
| Sardine | Example I4 | 6 | 1 | 0 | 0 |
| | Comp. Ex. I4 | 0 | 0 | 7 | 0 |

As shown in Table 9, it is apparent that the taste improvement agent of the present invention added to a food or drink has an effect of enhancing its full body, richness, enahncement, saltiness or the like; has a taste improving effect providing improvement in fattiness, afterfeel, spicyness, or roast flavor; and an effect of masking an unpleasant smell or taste peculiar to food materials such as meats including livestock meat and fishes.

### [Example J, Comparative Example J] Addition to yakisoba noodles

The purified taste improvement agent (100 mg) obtained above in Example 8 was added (addition ratio: 0.25 wt%) to 40 g of a commercially available sauce for yakisoba noodles to obtain a taste-improved sauce for yakisoba noodles (Example J). A sauce of Comparative Example was prepared by adding a canola oil in an amount equal to that of the purified taste improvement agent (Comparative Example J).

With the sauce thus prepared, 150 g of commercially available yakisoba noodles were cooked. Organoleptic evaluation on them was conducted by a panel of seven experts. The results are shown in Table 10. As a result, the taste improvement agent of the present invention added to the yakisoba noodles of Example J showed an obviously taste enhancing effect, more specifically, thickened the taste, enriched the taste, and increased the spicyness. The yakisoba noodles of Comparative Example obtained using a canola oil showed no change in taste.

**[Table 10]**

| Yakisoba noodles | Organoleptic evaluation (the number of experts) | | | |
|---|---|---|---|---|
| | Greatly effective | Obviously effective | No effect | Adverse effect |
| Example J | 5 | 2 | 0 | 0 |
| Comparative Example J | 0 | 0 | 7 | 0 |

### [Example K, Comparative Example K] Addition to barbeque sauce for meat

The purified taste improvement agent (20 mg) obtained above in Example 8 was added (addition ratio: 0.02 wt%) to 100 g of a commercially available barbeque sauce for meat to obtain a barbeque sauce for meat having an improved taste (Example K). As a comparative example, a barbeque sauce for meat containing a canola oil in an amount equal to that of the purified taste improvement agent was prepared (Comparative Example K).

Organoleptic evaluation on the resulting barbeque sauce was conducted by a panel of seven experts. The results are shown in Table 11. As a result, the taste improvement agent of the present invention contained in the barbeque sauce for meat obtained in Example K widened its flavor and enriched the taste, thus obviously enhanced the taste. The sauce of Comparative Example K containing a canola oil showed no change in taste.

**[Table 11]**

| Barbeque sauce for meat | Organoleptic evaluation (the number of experts) | | | |
|---|---|---|---|---|
| | Greatly effective | Obviously effective | No effect | Adverse effect |
| Example K | 6 | 1 | 0 | 0 |
| Comparative Example K | 0 | 0 | 7 | 0 |

### [Example L, Comparative Example L] Addition to sesame sauce

The purified taste improvement agent (20 mg) obtained above in Example 8 was added (addition ratio: 0.02 wt%) to 100 g of a commercially available sesame sauce to obtain a taste improved sesame sauce (Example L). As a comparative example, a sesame sauce containing a canola oil in an amount equal to that of the purified taste improvement agent was prepared (Comparative Example L).

Organoleptic evaluation on the sesame oil thus prepared was conducted by a panel of seven experts. The results are shown in Table 12. As a result, the taste improvement agent of the present invention contained in the sesame sauce of Example L widened its taste, enriched the taste, and complemented the flavor of roasted sesame and thus, obviously enhanced the taste. The sesame sauce of Comparative Example L containing a canola oil showed no change in taste.

**[Table 12]**

| Sesame sauce | Organoleptic evaluation (the number of experts) | | | |
|---|---|---|---|---|
| | Greatly effective | Obviously effective | No effect | Adverse effect |
| Example L | 6 | 1 | 0 | 0 |
| Comparative Example K | 0 | 0 | 7 | 0 |

### [Example M, Comparative Example M] Addition to whole grain mustard

The purified taste improvement agent (20 mg) obtained above in Example 8 was added (addition ratio: 0.02 wt%) to 100 g of commercially available whole grain mustard to obtain taste-improved whole grain mustard (Example M). As a comparative example, a whole grain mustard containing a canola oil in an amount equal to that of the purified taste improvement agent was prepared (Comparative Example M).

Organoleptic evaluation on the whole grain mustard thus prepared was conducted by a panel of seven experts. The results are shown in Table 13. As a result, the taste improvement agent of the present invention contained in the whole grain mustard of Example M enhanced bitterness, thus obviously enhanced the taste. The whole grain mustard of Comparative Example M containing a canola oil showed no change in taste.

**[Table 13]**

| Whole grain mustard | Organoleptic evaluation (the number of experts) | | | |
|---|---|---|---|---|
| | Greatly effective | Obviously effective | No effect | Adverse effect |
| Example M | 5 | 2 | 0 | 0 |
| Comparative Example M | 0 | 0 | 7 | 0 |

### [Example N, Comparative Example N] Addition to coffee drink

An emulsion of the oxidation-treated taste improvement agent obtained above in Example 9 was prepared in a similar manner to that employed in Example C. The resulting emulsion was added to a commercially available canned coffee drink so as to give an addition ratio of 0.02 wt% (Example N) and organoleptic evaluation on it was conducted by a panel of seven experts. The results are shown in Table 14. It had improved richness, palatability, fattiness, and preference and in particular, it showed marked taste improvement in roast flavor, compared with the case where the oxidation treated-taste improvement agent had not been added, meaning that an emulsion containing 10 wt% of a medium-chain fatty acid triglyceride (ion exchanged water: 25 wt%, polyglyceryl monostearate: 5 wt%, purified glycerin: 60 wt%, medium-chain fatty acid triglyceride: 10 wt%) had been added (Comparative Example N).

**[Table 14]**

| Coffee drink | Organoleptic evaluation (the number of experts) | | | |
|---|---|---|---|---|
| | Greatly effective | Obviously effective | No effect | Adverse effect |
| Example N | 5 | 2 | 0 | 0 |
| Comparative Example N | 0 | 0 | 7 | 0 |

### [Example O, Comparative Example O] Addition of flavor oil to curry

The flavor oil obtained above in Example 10 was added to curry and organoleptic evaluation on the resulting curry was conducted (Example O). As the curry, a solution obtained by dissolving 250 g of commercially available curry roux in 1500 g of hot water was used for evaluation. The flavor oil (1.75 g) was added to the curry (addition ratio: 0.1 wt%). As a comparative example, curry containing, as a flavor oil, a palm oil in an amount equal to that of the above-mentioned flavor oil was prepared (Comparative Example O).

Organoleptic evaluation on the curry thus prepared was conducted by a panel of seven experts. The results are shown in Table 15. As a result, the flavor oil of Example O using the purified edible oil of the present invention complemented a roast flavor and provided fluffy spicyness when put in the mouth. It had thus an obviously enhanced taste. The flavor oil of Comparative Example O using a palm oil showed no change in taste.

**[Table 15]**

| Flavor oil | Organoleptic evaluation (the number of experts) | | | |
|---|---|---|---|---|
| | Greatly effective | Obviously effective | No effect | Adverse effect |
| Example O | 7 | 0 | 0 | 0 |
| Comparative Example O | 0 | 0 | 7 | 0 |

### [Example P, Comparative Example P] Deep frying

Deep frying was conducted using 200 g of the purified taste improvement agent obtained using the method described above in Example 8. A commercially available frozen croquette was put in the purified taste improvement agent heated to 180 °C. Three minutes later, the croquette was reversed. After cooking for two minutes by heating, it was taken out (Example P). As a comparative example, similar cooking was conducted by using a canola oil in an amount equal to that of the taste improvement agent (Comparative Example P).

Organoleptic evaluation on the croquette thus deep-fried was conducted by a panel of seven experts. The results are shown in Table 16. As a result, the taste improvement agent of the present invention used for the croquette of Example P widened the taste, provided richness, and enhanced enhancement, thus obviously enhanced the taste. The canola oil used for the croquette in Comparative Example P did not change the taste.

**[Table 16]**

| Croquette | Organoleptic evaluation (the number of experts) | | | |
|---|---|---|---|---|
| | Greatly effective | Obviously effective | No effect | Adverse effect |
| Example P | 7 | 0 | 0 | 0 |
| Comparative Example P | 0 | 0 | 7 | 0 |

The following is a formulation example of a flavor containing the taste improvement agent of the present invention.

### (Formulation Example Q) Lemon flavor

Components were mixed in accordance with the formulation shown below in Table 17 and a lemon flavor was prepared in a conventional manner.

**[Table 17]**

| (Component) | (Wt%) |
|---|---|
| (1) Eucalyptus oil | 10.0% |
| (2) Anethole | 2.0% |
| (3) Lemon oil | 1.0% |
| (4) 1-Menthol | 25.0% |
| (5) 1-Carvone | 25.0% |
| (6) Spearmint oil | 10.0% |
| (7) Taste improvement agent obtained in Example 1 | 0.02% |
| (8) Ethanol | Balance |
| Total | 100.0% |

### (Formulation Example R) Mint Flavor

Components were mixed in accordance with the formulation shown below in Table 18 and a mint flavor was prepared in a conventional manner.

**[Table 18]**

| (Component) | (Wt%) |
|---|---|
| (1) Peppermint oil | 20.0% |
| (2) Anethole | 6.0% |
| (3) Lemon oil | 1.0% |
| (4) Spearmint oil | 10.0% |
| (5) 1-Carvone | 23.0% |
| (6) Taste improvement agent obtained in Example 1 | 0.01 % |
| (7) 1-Menthol | Balance |
| Total | 100.0% |

### (Formulation Example S) Peppermint flavor

Components were mixed in accordance with the formulation shown below in Table 19 and a peppermint flavor was prepared in a conventional manner.

**[Table 19]**

| (Component) | (Wt%) |
|---|---|
| (1) Ethyl salicylate | 10.0% |
| (2) Dried bonito-containing resin | 1.0% |
| (3) 1-Menthol | 30.0% |
| (4) Peppermint essential oil | 5.0% |
| (5) Taste improvement agent obtained in Example 1 | 0.01% |
| (6) Peppermint oil | Balance |
| Total | 100.0% |

### (Formulation Example T) Mint powder flavor

Components were mixed in accordance with the formulation shown below in Table 20 and a mint powder flavor was prepared in a conventional manner.

**[Table 20]**

| (Component) | (Wt%) |
|---|---|
| (1) Peppermint oil | 10.0% |
| (2) Taste improvement agent obtained in Example 1 | 0.05% |
| (3) Gum Arabic | 30.0% |
| (4) Dextrin | Balance |
| Total | 100.0% |

### (Formulation Example U) Orange flavor

Components were mixed in accordance with the formulation shown below in Table 21 and an orange flavor was prepared in a conventional manner.

**[Table 21]**

| (Component) | (Wt%) |
|---|---|
| (1) Anethole | 2.0% |
| (2) Eucalyptus oil | 10.0% |
| (3) Orange oil | 1.0% |
| (4) 1-Carvone | 25.0% |
| (5) 1-Menthol | 25.0% |
| (6) Spearmint oil | 10.0% |
| (7) Taste improvement agent obtained in Example 1 | 0.02% |
| (8) Ethanol | Balance |
| Total | 100.0% |

The present invention has been described in detail and with reference to specific embodiments thereof. It will be apparent for those skilled in the art that various changes and modifications can be made without departing from the spirit and scope of the present invention. This application is based on Japanese Patent Application No. 2011-053430 filed on March 10, 2011, the entire subject matter of which is incorporated herein by reference.

### Industrial Applicability

The taste improvement agent of the present invention contained in a food or drink is effective for enhancing the taste of the food or drink and improving the taste of the food or drink. It can therefore be used widely for a variety of foods and drinks.

## Claims

1. A taste improvement agent for a food or drink, which is obtained from an extraction residue of a coffee.

2. A taste improvement agent for a food or drink, which is obtained by extracting an extraction residue of a coffee with an organic solvent to obtain an extract, and removing the organic solvent from the extract.

3. A taste improvement agent for a food or drink, which is obtained by extracting an extraction residue of a coffee with an organic solvent to obtain an extract, removing the organic solvent from the extract, and then, subjecting to an oxidation treatment.

4. The taste improvement agent according to claim 2 or 3, wherein the organic solvent is at least one selected from the group consisting of an alcohol compound having from 1 to 4 carbon atoms, a fatty acid alkyl ester compound having from 3 to 8 carbon atoms, an ether compound having from 4 to 6 carbon atoms, an aliphatic hydrocarbon having from 3 to 8 carbon atoms, and an aliphatic ketone having from 3 to 6 carbon atoms.

5. The taste improvement agent according to any one of claims 2 to 4, wherein the organic solvent is at least one selected from the group consisting of an alcohol compound having from 1 to 4 carbon atoms, a fatty acid alkyl ester compound having from 3 to 8 carbon atoms, an ether compound having from 4 to 6 carbon atoms, and an aliphatic hydrocarbon having from 3 to 8 carbon atoms.

6. A food or drink, comprising the taste improvement agent according to any one of claims 1 to 5.

7. An edible oil, comprising the taste improvement agent according to any one of claims 1 to 5.

8. A flavor, comprising the taste improvement agent according to any one of claims 1 to 5.

9. A flavor oil, which is obtained by thermal extraction from a mixture of the taste improvement agent according to any one of claims 1 to 5 and a flavoring material.

10. A method of improving taste of a food or drink, comprising adding the taste improvement agent according to any one of claims 1 to 5 to a food or drink.
